(19)

Europäisches
Patentamt
European
Patent Office
Office européen
des brevets

(11)  EP 1 602 783 B1

(12)  **EUROPEAN PATENT SPECIFICATION**

| | |
|---|---|
| (45) Date of publication and mention of the grant of the patent:<br>**26.02.2014  Bulletin 2014/09** | (51) Int Cl.:<br>*D21H 21/54* *(2006.01)*   *C08J 9/28* *(2006.01)* |

(21) Application number: **05252242.2**

(22) Date of filing: **09.04.2005**

(54) **Method of preparing paper**

Verfahren zur Herstellung von Papier

Procédé de fabrication de papier

(84) Designated Contracting States:
**DE ES GB SE**

(30) Priority:  **23.04.2004  EP 04291069**

(43) Date of publication of application:
**07.12.2005  Bulletin 2005/49**

(73) Proprietor: **ROHM AND HAAS COMPANY**
**Philadelphia,**
**Pennsylvania 19106-2399 (US)**

(72) Inventors:
• **Brown, James T.**
**Betchelsville, Pennsylvania 19505 (US)**

• **Fadat, Gerald**
**Valbonne 06560 (FR)**
• **Haigh, John R.**
**6300 Roquefort Les Pins (FR)**

(74) Representative: **Buckley, Guy Julian et al**
**Patent Outsourcing Limited**
**1 King Street**
**Bakewell**
**Derbyshire DE45 1DZ (GB)**

(56) References cited:
**EP-A- 0 419 206     US-A- 4 594 363**
**US-A- 4 726 986     US-A- 6 139 961**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

**Description**

The present invention relates to a method of preparing paper, or paperboard, using a hollow sphere polymer whose void has been created by swelling the polymer with a fixed or permanent base. The invention also relates to a paper prepared by the method.

Voided, or hollow emulsion polymers are generally prepared by swelling a multi-stage polymer, having a core and a shell, in such a way that one or more voids form in the interior of the emulsion polymer particle. Hollow emulsion polymers are often used in paints, coatings, inks, sunscreens, paper manufacture, and several other industrial arenas. In the paper industry, hollow emulsion polymers are used to make the surface of the paper, among other things, smoother, brighter, and more opaque. Additional benefits of hollow sphere polymers is that they can be less costly, and thus more cost effective, than pigments or fillers, such as titanium dioxide, and they impart higher degrees of opacity than pigments or fillers. In the paper industry, it is known to form, and dry the paper, and then coat it with a composition containing, among other things, hollow emulsion polymers, and pigments or fillers. However, coating of the paper can increase the cost, thickness, and/or weight of the paper. This is disadvantageous in applications for which coating is not needed for performance, and there is a need to limit the thickness of the paper, for example papers typically used for bibles, prescription medication container inserts, legal paper, and the like.

U.S. Patent No. 4,594,363 discloses a process for making core/sheath polymer particles containing voids, including the step of swelling, at elevated temperature, the resultant core/sheath polymer particles with fixed or permanent base so as to produce a dispersion of particles which, when dried, contain a microvoid. However, the patent does not disclose a method of using the core/sheath polymer particles to make paper by incorporating them in the paper during wet-end processing of the paper.

U.S. Patent No. 6,139,961 discloses a method for improving the strength and opacity of paper or paperboard by applying to the paper, during wet-end processing of the paper, a hollow sphere organic polymer having a core, a hard polymer shell surrounding the core, and a soft polymer shell surrounding the first shell, wherein (1) the second shell polymer is at least 15% by weight of the total weight of the first shell polymer and the second shell polymer, (2) the second shell polymer has a glass transition temperature of -15°C to -50°C and (3) the polymer has been swollen by a volatile, or fixed or permanent base. However, the patent does not disclose use of a hollow sphere polymer having an outermost shell having a glass transition temperature of greater than 25 °C.

One advantage of incorporating the hollow sphere polymer during the wet-end processing of the paper, is that it enables the achievement of properties such as smoothness, brightness, and opacity of the paper, without increasing the thickness of the paper as much as occurs when the paper is coated with the hollow sphere polymer. Applicants have unexpectedly discovered that hollow sphere polymers that have been swollen by a fixed or permanent base are useful for providing at least one of the above-mentioned enhancements to paper that is to be used in applications in which it will be subjected to harsh conditions, such as high temperatures and pressures, for examples decorative laminate paper. Applicants have further unexpectedly discovered that despite the subjection of the hollow sphere polymer to the wet-end conditions of, among other things, high temperature, and/or humidity, followed by the later subjection to the even harsher conditions of, for example, decorative laminate processing, the hollow sphere polymer, when used in conjunction with a pigment in the wet end, is still able to impart to a decorative laminate product the improvements in opacity, at a lower cost than is achievable where a pigment is utilized in the wet-end without an hollow sphere polymer.

The present invention, in its various aspects, is as set out in the accompanying claims.

A first aspect of the present invention is a method of preparing a paper or paperboard, comprising the steps of: (a) providing a hollow sphere polymer made by: (i) forming a core stage polymer, (ii) encapsulating said core stage polymer with at least one shell stage polymer, wherein said shell stage polymer permits penetration of a fixed or permanent base, wherein said shell stage polymer has a glass transition temperature of greater than 25 °C and wherein the outermost shell stage polymer has a Tg greater than 25°C; (iii) contacting the resulting multi-stage polymer particles with fixed or permanent base, wherein either (1) said shell stage polymer comprises at least 1% acid functional monomer, or (2) said contacting takes place in the presence of solvent; (b) during the wet-end formation of said paper or paperboard, incorporating in said paper or paperboard a composition comprising said hollow sphere polymer; and (c) drying said paper or paperboard; wherein said core stage polymer is formed by polymerizing from 5% by weight to 100% by weight, based on the total weight of core stage polymer, of said monoethylenically unsaturated monomer containing acid functionality, and from 0% by weight to 95% by weight, based on the total weight of core stage polymer, of at least one nonionic monoethylenically unsaturated monomer; wherein said shell stage polymer is formed by emulsion polymerizing in the presence of said core stage polymer from 90% by weight to 99.9% by weight, based on the total weight of shell stage polymer, of at least one nonionic monoethylenically unsaturated monomer, and from 0.1 % by weight to 10% by weight, based on the total weight of shell stage polymer, of an acid-functional monoethylenically unsaturated monomer; and wherein said acid-functional monoethylenically unsaturated monomer is added to the polymerization of said shell stage polymer over the first 50% of the total shell stage monomer feed, and the particle size of said core stage polymer is from 130 nm to 2.0 $\mu$m or less than 130 nm.

A second aspect of the present invention is a method of preparing a decorative laminate paper, comprising the steps of: (a) providing a hollow sphere polymer made by: (i) forming a core stage polymer , (ii) encapsulating said core stage polymer with at least one shell stage polymer, wherein said shell stage polymer permits penetration of a fixed or permanent base, wherein said shell stage polymer has a glass transition temperature of greater than 25 °C and wherein the outermost shell stage polymer has a Tg greater than 25°C; (iii) contacting the resulting multi-stage polymer particles with fixed or permanent base, wherein either (1) said shell stage polymer comprises at least 1% acid functional monomer, or (2) said contacting takes place in the presence of solvent; (b) contacting said decorative laminate paper with a composition comprising said hollow sphere polymer and at least one pigment, wherein said contacting comprises either (1) coating said decorative laminate paper with said composition, or (2) during the wet-end formation of said decorative laminate paper, incorporating said composition in said decorative laminate paper; and (c) drying said decorative laminate paper, wherein said core stage polymer is formed by polymerizing from 5% by weight to 100% by weight, based on the total weight of core stage polymer, of said monoethylenically unsaturated monomer containing acid functionality, and from 0% by weight to 95% by weight, based on the total weight of core stage polymer, of at least one nonionic monoethylenically unsaturated monomer; wherein said shell stage polymer is formed by emulsion polymerizing in the presence of said core stage polymer from 90% by weight to 99.9% by weight, based on the total weight of shell stage polymer, of at least one nonionic monoethylenically unsaturated monomer, and from 0.1% by weight to 10% by weight, based on the total weight of shell stage polymer, of an acid-functional monoethylenically unsaturated monomer; and wherein said acid-functional monoethylenically unsaturated monomer is added to the polymerization of said shell stage polymer over the first 50% of the total shell stage monomer feed, and the particle size of said core stage polymer is from 130 nm to 2.0 $\mu$m or less than 130 nm.

A third aspect of the present invention is a paper formed by the method of the first or second aspect.

The method of the present invention is directed toward the preparation of a paper that has incorporated within it, a fixed or permanent base-swollen hollow sphere polymer. The first step of the method is the provision of a hollow sphere polymer that has been made by forming a multi-stage polymer having a core stage that is encapsulated by a shell stage, and then swelling the multi-stage polymer by contacting it with a fixed or permanent base, to form the hollow sphere polymer. Hollow sphere polymers of this type are well known in the art, and commercially available.

The core stage polymer is an emulsion polymer that has been formed by polymerizing at least one monoethylenically unsaturated monomer containing acid functionality. The core stage polymer is prepared by emulsion homo-polymerization of the acid-containing monomer, or by co-polymerization of the acid-containing monomer with at least one other acid-containing monomer. Suitable monoethylenicially unsaturated monomers containing acid functionality, useful for making the core stage polymer, include, for example, monomers containing at least one carboxylic acid group including acrylic acid, methacrylic acid, acryloxypropionic acid, (meth)acryloxypropionic acid, itaconic acid, aconitic acid, maleic acid or anhydride, fumaric acid, crotonic acid, monomethyl maleate, monomethyl fumarate, and monomethyl itaconate; also contemplated is the use of terminally unsaturated acid-containing oligomers such as, for example, are taught in US patents No. 5,710,227 and 6,046,278 and EP 1010706, and including comb/graft, block, and mixed block oligomers. The use of the term "(meth)" followed by another term such as acrylate, acrylonitrile, or acrylamide, as used throughout the disclosure, refers to both acrylate, acrylonitrile, or acrylamide and methacrylate, methacrylonitrile, and methacrylamide, respectively. Acrylic acid and methacrylic acid are preferred.

In general, core copolymers containing at least about 5%, preferably at least 10%, by weight of the acid mers have practical swellability for the purposes of the present invention. However, there may be instances where, because of the hydrophobicity of certain comonomers, the copolymer may require more, or less, than 5 weight percent of acid-containing monomer. As noted above, the core stage polymer may be formed by homo-polymerization of an acid-containing monomer. Thus, the invention includes a core containing 100% of the emulsion polymerized acid-containing monomer. A preferred maximum quantity of acid-containing monomer is about 70%, by weight, of the total core stage monomers.

In a preferred embodiment, the acid-containing monomer is copolymerized with one or more nonionic monoethylenically unsaturated monomers. In one embodiment, the core stage polymer is formed by copolymerizing from 5 to 100%, preferably from 20% to 60%, and more preferably, from 30% to 50%, by weight, based on the weight of the core stage polymer, of at least one ethylenicially unsaturated monomer containing acid functionality, and from 0 to 95% by weight, based on the weight of the core stage polymer, of at least one nonionic monoethylenically unsaturated monomer. Suitable nonionic monoethylenically unsaturated monomers for making the core stage polymer include styrene, $\alpha$-methyl styrene, p-methyl styrene, t-butyl styrene, vinyltoluene, ethylene, vinyl acetate, vinyl chloride, vinylidene chloride, (meth)acrylonitrile, (meth)acrylamide, ($C_1$-$C_{20}$) alkyl or ($C_3$-$C_{20}$) alkenyl esters of (meth)acrylic acid, such as methyl (meth)acrylate, ethyl (meth)acrylate, butyl (meth)acrylate, 2-ethylhexyl (meth)acrylate, hydroxyethyl(meth)acrylate, hydroxypropyl(meth)acrylate, benzyl (meth)acrylate, lauryl (meth)acrylate, oleyl (meth)acrylate, palmityl (meth)acrylate, stearyl (meth)acrylate and the like.

The core stage polymer may optionally contain less than 20% by weight, preferably from 0.1 to 3% by weight, based on the total weight of the core, of polyethylenically unsaturated monomer, wherein the amount used is generally approximately directly proportional to the amount of monoethylenically unsaturated acid-containing monomer used; in other words, as the relative amount of monoethylenically unsaturated acid-containing monomer increases, it is acceptable to increase the level of polyethylenically unsaturated monomer. Alternatively, the core polymer may contain from 0.1 to 60 % by weight, based on the total weight of the core polymer, of butadiene.

Suitable polyethylenically unsaturated monomers include comonomers containing at least two addition polymerizable vinylidene groups and are alpha beta ethylenically unsaturated monocarboxylic acid esters of polyhydric alcohols containing 2-6 ester groups. Such comonomers include alkylene glycol diacrylates and dimethacrylates, such as for example, ethylene glycol diacrylate, ethylene glycol dimethacrylate, 1,3-butylene glycol diacrylate, 1,4-butylene glycol diacrylate propylene glycol diacrylate and triethylene glycol dimethylacrylate; 1,3-glycerol dimethacrylate; 1,1,1-trimethylol propane dimethacrylate; 1,1,1-trimethylol ethane diacrylate; pentaerythritol trimethacrylate; 1,2,6-hexane triacrylate; sorbitol pentamethacrylate; methylene bis-acrylamide, methylene bis-methacrylamide, divinyl benzene, vinyl methacrylate, vinyl crotonate, vinyl acrylate, vinyl acetylene, trivinyl benzene, triallyl cyanurate, divinyl acetylene, divinyl ethane, divinyl sulfide, divinyl ether, divinyl sulfone, diallyl cyanamide, ethylene glycol divinyl ether, diallyl phthalate, divinyl dimethyl silane, glycerol trivinyl ether, divinyl adipate; dicyclopentenyl (meth)acrylates; dicyclopentenyloxy (meth)acrylates; unsaturated esters of glycol monodicyclopentenyl ethers; allyl esters of mono- and dicarboxylic acids having terminal ethylenic unsaturation including allyl (meth)acrylate, diallyl maleate, diallyl fumarate, diallyl itaconate and the like.

The shell stage of the hollow sphere polymer of this invention has a relatively moderate to high glass transition temperature (Tg). The outermost shell stage polymer Tg is greater than 25 °C, preferably greater than 50 °C, more preferably greater than 70 °C, and most preferably greater than 90 °C, as calculated by the Fox Equation (T.G. Fox, Bull. Am. Physics Soc., Volume 1, Issue No. 3, page 123 (1956)). That is, for calculating the Tg of a copolymer of monomers M1 and M2,

$$1/Tg(calc.)= w(M1)/Tg(M1) + w(M2)/Tg(M2),$$

wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2,
all temperatures being in °K.

The shell stage polymer is the product of emulsion polymerizing a shell stage monomer system in the presence of the core stage polymer. The monomers used, and the relative proportions thereof in the shell stage polymer, should be such that the shell stage polymer permits permeation of a fixed or permanent base. It is preferred that the shell stage monomer system be all acrylic. However, in a particularly preferred embodiment, the shell stage polymer contains as copolymerized units butyl methacrylate, methyl methacrylate, and from about 1 to about 10% by weight methacrylic acid.

As described herein-above, the core stage polymer contains co-polymer having as copolymerized units from 5 to 100%, based on the weight of the core stage polymer, of at least one ethylenically unsaturated monomer containing acid functionality, and from 0 to 95% by weight, based on the weight of the core stage polymer, of at least one nonionic monoethylenically unsaturated monomer; and the shell stage polymer is formed by polymerizing from about 90% by weight to about 99.9% by weight, based on the total weight of shell stage polymer, of at least one nonionic monoethylenically unsaturated monomer, and from about 0.1 % by weight to about 10% by weight, based on the total weight of shell stage polymer, of an acid-functional monoethylenically unsaturated monomer. The acid-functional monoethylenically unsaturated monomer is added to the polymerization of the shell stage polymer over the first 50% of the total shell stage monomer feed, based on the total weight of the shell stage monomer feed, preferably over the first 25% of the feed, and most preferably over the first 10% of the feed.

The hollow sphere polymer system must either (1) contain a shell stage monomer system containing at least 1% by weight acid functional monomer, the balance of which may be a nonionic monoethylenically unsaturated co-monomer, such as those mentioned herein-above for the core stage polymer; or (2) involve the swelling of the hollow sphere polymer in the presence of a solvent. The preferred amount of acid functional monomer in the monomer system used to prepare the shell stage polymer is from 5 to 10% by weight when solvent is not used, and from about 1 to 2% by weight when solvent is used.

When solvent is used, it assists in penetration of the shell by the fixed or permanent base. Suitable amounts of solvent are from 1 to 100 parts by weight, based on 100 parts by weight hollow sphere polymer, preferably from 5-10 parts by weight. Suitable solvents are any which will plasticize the shell, for example, hexanol, ethanol, 3-hydroxy-2,2,4-trimethylpentyl isobutyrate, toluene, mixtures of solvents, and the like. The solvent can be added either before, after, or with the addition of the base. In certain cases the shell stage monomer system itself can function as the solvent for the shell stage polymer.

Within the scope of the invention are, among others, shell stage polymers which completely encapsulate the core stage polymer; shell stage polymers which substantially, but incompletely encapsulate the core stage polymer; polymers that are swollen to provide a particle with at least one pore communicating between the surface of the particle and the interior, i.e., core or void, of the particle; polymer particles having multiple cores; multistaged polymers wherein the core polymer is a precursor to the acid-functionality containing core polymer of this invention and is subsequently converted to the acid-functionality containing core polymer of this invention by means such as hydrolysis of the core polymer according to the teachings of US Patent Nos. 5,041,464; 5,157,084; and 5,216,044, whether before, during, or after shell polymer formation and the core polymer is contacted with a fixed or permanent base, during or after the hydrolysis.

In one embodiment of the invention, the shell stage polymer is crosslinked. The crosslinking level is preferably from at least 2 mol percent, more preferably from at least 5%, based on the total mole of monomer used in the hollow sphere polymer. Crosslinking in the shell can be derived from the use of one or more polyethylenically unsaturated monomers. Suitable polyethylenically unsaturated monomers include those described herein-above for the core stage polymer. Alternatively, crosslinking of the shell stage polymer may be derived from the use of one or more multi-functional monomers to provide post-polymerization crosslinking of the shell. The multi-functional monomers contain at least one functional group capable of vinyl-copolymerization, and at least one functional group capable of reaction with suitable reactive molecules. Suitable reactive molecules include, for example, amines, diamines, amino acids and aminoalkyltialkoxysilanes; optionally followed by the addition of other reactive molecules: aldehydes (such as formaldehyde) dialdehydes (such as glutaric dialdehyde), hydrazines and dihydrazines (such as succinic dihydrazine) to form post-polymerization crosslinked sol-gels.

Examples of suitable functional groups and reactive molecules for post-polymerization crosslinking of the shell stage polymer, as well as multi-functional monomers suitable for post-polymerization crosslinking, are illustrated, without limitation, in European Patent Application EP 1092421.

The multi-stage polymer particles containing the core and shell stage polymers are prepared by sequential emulsion polymerization methods, which are well known in the art, for example as described in United State Patent No. 4,594,363. By "sequential emulsion polymerization" is meant herein that the homo- or co-polymers of one stage of the polymer are prepared in aqueous medium, by an emulsion polymerization process, in the presence of the dispersed polymer particles of a polymer stage previously formed by emulsion polymerization, such that the previously formed emulsion polymers are increased in size by deposition thereon of emulsion polymerized product of one, or more, successive monomer charges that are introduced into the medium containing the dispersed particles of the preformed emulsion polymer. Each stage of the hollow sphere polymer may be made in a single stage, or step, of the sequential polymerization, or may be made by a plurality of steps in sequence.

In the sequential emulsion polymerization with which the present invention is concerned, the term "seed" polymer is used to refer to an aqueous emulsion polymer dispersion, which may be the dispersion containing the first-formed polymer stage, or it may be the emulsion polymer dispersion obtained at the end of any subsequent stage, except the final stage of the sequential polymerization. Thus, a core stage polymer which is intended to be encapsulated by one, or more, subsequent stages of emulsion polymerization, may itself be termed a seed polymer for the next stage. Likewise, a seed polymer may be utilized to form the nuclei on which the core stage polymer is formed.

A water-soluble free radical initiator may be utilized in the aqueous emulsion polymerization. Suitable water-soluble free radical initiators include hydrogen peroxide; tert-butyl peroxide; alkali metal persulfates such as sodium, potassium and lithium persulfate; ammonium persulfate; and mixtures of such initiators with a reducing agent. Reducing agents include: sulfites, such as alkali metal metabisulfite, hydrosulfite, and hyposulfite; sodium formaldehyde sulfoxylate; and reducing sugars such as ascorbic acid and isoascorbic acid. The amount of initiator is preferably from 0.01 to 3 % by weight, based on the total amount of monomer and in a redox system the amount of reducing agent is preferably from 0.01 to 3 % by weight based on the total amount of monomer. The temperature may be in the range of about 10°C to 100°C. In the case of the persulfate systems, the temperature is preferably in the range of 60°C to 90°C. In the redox system, the temperature is preferably in the range of 30°C to 70°C. The type and amount of initiator may be the same or different in the various stages of the multi-stage polymerization.

One or more nonionic or anionic emulsifiers, or surfactants, may be used, either alone or together. Examples of suitable nonionic emulsifiers include tert-octylphenoxyethylpoly(39)-ethoxyethanol, dodecyloxypoly(10)ethoxyethanol, nonylphenoxyethyl-poly(40)ethoxyethanol, polyethylene glycol 2000 monooleate, ethoxylated castor oil, fluorinated alkyl esters and alkoxylates, polyoxyethylene (20) sorbitan monolaurate, sucrose monococoate, di(2-butyl)phenoxypoly (20) ethoxyethanol, hydroxyethylcellulosepolybutyl acrylate graft copolymer, poly(ethylene oxide)poly(butyl acrylate) block copolymer, block copolymers of propylene oxide and ethylene oxide, 2,4,7,9-tetramethyl-5-decyne-4,7-diol ethoxylated with 30 moles of ethylene oxide, N-polyoxyethylene(20)lauramide, N-lauryl-N-polyoxyethylene(3)amine and poly (10)ethylene glycol dodecyl thioether. Examples of suitable anionic emulsifiers include sodium lauryl sulfate, sodium dodecylbenzenesulfonate, potassium stearate, sodium dioctyl sulfosuccinate, sodium dodecyldiphenyloxide disulfonate, nonylphenoxyethylpoly(1)ethoxyethyl sulfate ammonium salt, sodium styrene sulfonate, sodium dodecyl allyl sulfosuccinate, linseed oil fatty acid, sodium or ammonium salts of phosphate esters of ethoxylated nonylphenol, sodium octoxynol-3-sulfonate, sodium cocoyl sarcocinate, sodium 1-alkoxy-2-hydroxypropyl sulfonate, sodium alpha-olefin ($C_{14}$-$C_{16}$) sulfonate, sulfates of hydroxyalkanols, tetrasodium N-(1,2-dicarboxy ethyl)-N-octadecylsulfo-succinamate, disodium N-octadecylsulfosuccinamate, disodium alkylamido polyethoxy sulfosuccinate, disodium ethoxylated nonylphenol half ester of sulfosuccinic acid and the sodium salt of tert-octylphenoxyethoxypoly(39) ethoxyethyl sulfate. The one or more surfactants are generally used at a level of from 0 to 3 % based on the weight of the multi-stage polymer. The one or more surfactants can be added prior to the addition of any monomer charge, during the addition of a monomer charge or a combination thereof. In certain monomer/emulsifier systems for forming the shell, the tendency to produce gum or coagulum in the reaction medium may be reduced or prevented by the addition of about 0.05% to about 2.0% by weight, based on total weight of the shell polymer, of emulsifier without detriment to the deposition of the polymer formed on the previously formed core particles.

The amount of emulsifier may be zero, in the situation wherein a persulfate initiator is used, to 3 % by weight, based on the weight of total weight of the core polymer. By carrying out the emulsion polymerization while maintaining low levels of emulsifier, the subsequent stages of polymer-formation deposit the most-recently formed polymer on the existing dispersed polymer particles resulting from the preceding step or stage. As a general rule, the amount of emulsifier should be kept below that corresponding to the critical micelle concentration for a particular monomer system, but while this limitation is preferable and produces a unimodal product, it has been found that in some systems the critical micelle concentration of the emulsifier may be exceeded somewhat without the formation of an objectionable or excessive number of dispersed micelles or particles. It is for the purpose of controlling the number of micelles during the various stages of polymerization so that the deposition of the subsequently formed polymer in each stage occurs upon the dispersed micelles or particles formed in the previous stages, that the concentration of emulsifier is kept low.

The viscosity- average molecular weight of the polymer formed in a given stage may range from 100,000, or lower if a chain transfer agent is used, to several million molecular weight. When 0.1% by weight to 20% by weight, based on the weight of the monomer, of a polyethylenically unsaturated monomer mentioned herein-above is used in making the core, the molecular weight is increased whether or not crosslinking occurs. The use of the polyethylenically unsaturated monomer reduces the tendency of the core polymer to dissolve when the multistaged polymer is treated with a swellant for the core. If it is desired to produce a core having a molecular weight in the lower part of the range, such as from 500,000 down to as low as about 20,000, it is frequently most practical to do so by avoiding the polyethylenically unsaturated monomers and using a chain transfer agent instead, such as 0.05% to 2% or more thereof, examples being alkyl mercaptans, such as sec-butyl mercaptan.

The amount of polymer deposited to form shell polymer is generally such as to provide an overall size of the multistage polymer particle of from 70 nm to 4.5 $\mu$m, preferably from 100 nm to 3.5 $\mu$m, more preferably from 200 nm to 2.0 $\mu$m, in unswollen condition, whether the shell polymer is formed in a single stage, or in a plurality of stages. In order to minimize the dry density of the final product, it is preferable to deposit only as much shell polymer as is needed to fully encapsulate the core.

The multi-stage polymer containing the core and shell stage polymers is swollen when the particles are subjected to a fixed or permanent base capable of swelling the core, resulting in the formation of the hollow sphere polymer. The swelling, or expansion, of the core may involve partial merging of the outer periphery of the core into the pores of the inner periphery of the shell and also partial enlargement or bulging of the shell and the entire particle overall. Suitable swelling agents are those which, in the presence of the multistage emulsion polymer, are capable of permeating the shell and swelling the core. By "fixed or permanent base" is meant herein a nonvolatile hard base, such as a metal hydroxide such as, for example, sodium hydroxide, potassium hydroxide, lithium hydroxide, strontium hydroxide, barium hydroxide. Preferred are sodium hydroxide and potassium hydroxide. The fixed or permanent base differs from "volatile bases", such as ammonia, ammonium hydroxide, amines, salts of weak acids, which to some greater or lesser degree evaporate from the emulsion either at ambient temperatures or upon drying, and which have a pKb<7 (in water at 25 °C). Solvents, such as, for example, ethanol, hexanol, octanol, Texanol® solvent and those described in U.S. Patent 4,594,363, may be added to aid in fixed or permanent base penetration.

In one embodiment of the invention, a composition containing the hollow sphere polymer is incorporated into a paper or paperboard during the wet-end formation of the paper or paperboard. By "wet-end" is meant herein, the part of the paper or paperboard processing during which a predominantly cellulosic fiber pulp slurry is formed into a wet sheet on a paper machine, by techniques that are well known in the art. The hollow sphere polymer is added to, and mixed with the slurry, which is then formed into a wet sheet of paper or paperboard that contains, or incorporates, the hollow sphere polymer. The paper or paperboard is then dried. When the hollow sphere polymer particles within the paper or paperboard are at least partially dried, they produce voided polymer particles that impart favorable properties, such as at least one of bulk, brightness and opacity to the paper or paperboard.

It is well known in the art to utilize hollow sphere polymers to replace or extend pigments, so as to reduce the cost of the final product. Favorable properties, such as brightness, and opacity, are achievable where the hollow sphere polymer is not used with a pigment. However, in some embodiments of the invention, the hollow sphere polymer is utilized in conjunction with a pigment. The pigment is added, along with the hollow sphere polymer, during the wet-end processing of the paper or paperboard. Any pigment may be used, including, for example, calcium carbonate, talc, clay, titanium dioxide, and the like. Preferably, the hollow sphere polymer is utilized for extendsion of costly pigments, such as titanium dioxide. Thus, the pigment is incorporated, along with the hollow sphere polymer, into the paper or paperboard.

The method of the invention may be used to prepare any type of paper. In one embodiment of the invention, the paper containing the hollow sphere polymer is thin, such as bible paper, prescription medicine insert paper, legal paper, and the like. In this embodiment, the paper typically has a thickness of from about 12.25 $\mu$m to 50.8 $\mu$m) 0.5 mil. to about 2 mil.

As noted herein-above, hollow sphere polymers are not currently used during the manufacture of decorative laminate paper, whether by incorporation within, or coating on the decorative laminate paper. By "decorative laminate paper" is meant herein paper of the type that is typically utilized for the manufacture of decorative laminates. Often, the decorative laminate paper is printed and/or embossed prior to lamination with a hard-wearing synthetic resin, to form the decorative laminate. In one embodiment of the present invention, the paper containing the hollow sphere polymer is of a type that is typically subjected to later processing under harsh conditions, such as high temperature, pressure, and/or humidity, such as, for example, decorative laminate paper. In this embodiment of the invention, the hollow sphere polymer may be incorporated in the decorative laminate paper, during wet-end processing of the paper, as described herein-above. Alternatively, the hollow sphere polymer may be coated onto the formed, and optionally, dried decorative laminate paper.

The following examples illustrate specific aspects and particular embodiments of the invention which, however, in not to be construed as limited thereby.

EXAMPLE 1: Preparation of Hollow Sphere Polymer

A 5-liter round-bottom flask is equipped with paddle stirrer, thermometer, nitrogen inlet and reflux condenser. To 1780 grams of deionized water heated to 90 °C in the flask under a nitrogen atmosphere, there is added 2.5 grams of sodium persulfate dissolved in 30 grams of deionized water. This is immediately followed by the addition of 275 grams of the core prepared in Example 0-(a) of United States Patent No. 5,494,971 to the kettle, with a corresponding drop in reaction temperature to 80 °C. A monomer emulsion containing 70 grams of deionized water, 1 gram of Siponate DS-4, 80 grams of styrene and 12 grams of acrylic acid is added to the kettle over a 25 minute period. At the end of the first feed, a second monomer emulsion containing 210 grams of deionized water, 10 grams of Siponate DS-4, 781 grams of styrene, 1.52 grams of linseed oil fatty acid and 3.2 grams of allyl methacrylate is added to the kettle over a 75 minute period. Along with these feeds, a solution of 1.4 grams of sodium persulfate, in 150 grams of deionized water, is co-fed to the kettle. The reaction mixture temperature is allowed to increase to 90 °C. Upon completion of the second monomer emulsion and co-feeds, a mixture of 5 grams of 1.5% ferrous sulfate, and 5 grams ofveresene is added to the kettle. At the same time, the kettle is cooled to 85 °C. When 85 °C is reached, a third monomer emulsion containing of emulsion consisting of 70 grams of deionized water, 21.9 grams of Siponate DS-4, 170 grams of styrene, and 2.5 grams of TEMPO is added to the kettle. This is followed by the addition of 500 grams of a 3.3% hot (85 °C) solution of sodium hydroxide. After holding at 85 °C for 20 minutes, a solution of 4.14 grams of tBHP in 25 grams of deionized water is added, immediately followed by a cofeed of 2.57 grams of isoascorbic acid in 85 deionized water over 20 minutes. The final product is cooled to room temperature yielding a 1100 nm particle at 26% total solids, with a 55% void volume.

EXAMPLE 2: Wet end incorporation of hollow sphere polymer

The hollow sphere polymer of Example 1, and a refined wood pulp, are mixed to provide a blend containing a ratio of 10 to 90 hollow sphere pigment to wood pulp, based on dry weight. This blend is diluted to a 0.2% solids dispersion under agitation, and a paper sample is formed on the CTP (Centre Technique de Papier) Retention Former. The paper sample thus formed is dried in an oven at 95 °C at 50% relative humidity for 10 minutes.

**Claims**

**1.** A method of preparing a paper or paperboard, comprising the steps of:

    (a) providing a hollow sphere polymer made by:

i. forming a core stage polymer,

ii. encapsulating said core stage polymer with at least one shell stage polymer, wherein said shell stage polymer permits penetration of a fixed or permanent base,

wherein said shell stage polymer has a glass transition temperature of greater than 25°C and wherein the outermost shell stage polymer has a Tg greater than 25°C;

iii. contacting the resulting multi-stage polymer particles with fixed or permanent base,

wherein either (1) said shell stage polymer comprises at least 1% acid functional monomer, or (2) said contacting takes place in the presence of solvent;

(b) during the wet-end formation of said paper or paperboard, incorporating in said paper or paperboard a composition comprising said hollow sphere polymer; and

(c) drying said paper or paperboard;

wherein said core stage polymer is formed by polymerizing from 5% by weight to 100% by weight, based on the total weight of core stage polymer, of said monoethylenically unsaturated monomer containing acid functionality, and from 0% by weight to 95% by weight; based on the total weight of core stage polymer, of at least one nonionic monoethylenically unsaturated monomer;

wherein said shell stage polymer is formed by emulsion polymerizing in the presence of said core stage polymer from 90% by weight to 99.9% by weight, based on the total weight of shell stage polymer, of at least one nonionic monoethylenically unsaturated monomer, and from 0.1 % by weight to 10% by weight, based on the total weight of shell stage polymer, of an acid-functional monoethylenically unsaturated monomer; and

wherein said acid-functional monoethylenically unsaturated monomer is added to the polymerization of said shell stage polymer over the first 50% of the total shell stage monomer feed, and the particle size of said core stage polymer is from 130 nm to 2.0 $\mu$m or less than 130 nm.

2. The method, according to claim 1, wherein.

3. The method of claim 1, wherein said shell stage polymer is crosslinked.

4. The method of claim 1, wherein said paper has a thickness of 12.25 $\mu$m to 50.8 $\mu$m (0.5 mil to 2 mil).

5. The method, according to claim 1, wherein said incorporated composition further comprises at least one pigment.

6. A paper formed by the method of any one of claims 1-5.

7. A method as claimed in claim 5, wherein the paper is a decorative laminate paper.

8. A decorative laminate paper formed by the method of claim 7.

**Patentansprüche**

1. Ein Verfahren zum Herstellen eines Papiers oder einer Pappe, das die folgenden Schritte beinhaltet:

(a) Bereitstellen eines Hohlkugelpolymers, das durch Folgendes gefertigt wird:

i. Bilden eines Kernstufenpolymers,

ii. Einkapseln des Kernstufenpolymers mit mindestens einem Schalenstufenpolymer,

wobei das Schalenstufenpolymer eine Penetration einer festen oder beständigen Base gestattet,

wobei das Schalenstufenpolymer eine Glasübergangstemperatur von mehr als 25 °C aufweist und

wobei das äußerste Schalenstufenpolymer eine Tg von mehr als 25 °C aufweist,

iii. In-Kontakt-Bringen der resultierenden mehrstufigen Polymerpartikel mit fester oder beständiger Base,

wobei entweder (1) das Schalenstufenpolymer mindestens 1 % säurefunktionelles Monomer beinhaltet oder (2) das In-Kontakt-Bringen in Gegenwart eines Lösungsmittels stattfindet;

(b) während der Bildung des Papiers oder der Pappe in der Nasspartie, Einbringen einer Zusammensetzung, die das Hohlkugelpolymer beinhaltet, in das Papier oder die Pappe; und

(c) Trocknen des Papiers oder der Pappe;

wobei das Kernstufenpolymer durch Polymerisieren von 5 Gew.-% bis 100 Gew.-%, bezogen auf das Gesamtgewicht an Kernstufenpolymer, des Säurefunktionalität enthaltenden monoethylenisch ungesättigten Monomers und von 0 Gew.-% bis 95 Gew.-%, bezogen auf das Gesamtgewicht an Kernstufenpolymer, mindestens eines nichtionischen, monoethylenisch ungesättigten Monomers gebildet wird;

wobei das Schalenstufenpolymer durch Emulsionspolymerisieren von 90 Gew.-% bis 99,9 Gew.-%, bezogen auf das Gesamtgewicht an Schalenstufenpolymer, mindestens eines nichtionischen, monoethylenisch ungesättigten Monomers und von 0,1 Gew.-% bis 10 Gew.-%, bezogen auf das Gesamtgewicht an Schalenstufenpolymer, eines säurefunktionellen, monoethylenisch ungesättigten Monomers in Gegenwart des Kernstufenpolymers gebildet wird; und

wobei das säurefunktionelle, monoethylenisch ungesättigte Monomer zu der Polymerisation des Schalenstufenpolymers über die ersten 50 % der gesamten Schalenstufenmonomerzufuhr hinzugefügt wird und die Partikelgröße des Kernstufenpolymers von 130 nm bis 2,0 μm oder weniger als 130 nm beträgt.

2.  Verfahren gemäß Anspruch 1, wobei die Partikelgröße des Kernstufenpolymers weniger als etwa 130 nm beträgt.

3.  Verfahren gemäß Anspruch 1, wobei das Schalenstufenpolymer vernetzt ist.

4.  Verfahren gemäß Anspruch 1, wobei das Papier eine Dicke von 12,25 μm bis 50,8 μm (0,5 mil bis 2 mil) aufweist.

5.  Verfahren gemäß Anspruch 1, wobei die eingebrachte Zusammensetzung ferner mindestens ein Pigment beinhaltet.

6.  Ein durch das Verfahren gemäß einem der Ansprüche 1-5 gebildetes Papier.

7.  Verfahren gemäß Anspruch 5, wobei das Papier ein Schichtstoff-Dekorationsmaterialpapier ist.

8.  Ein durch das Verfahren gemäß Anspruch 7 gebildetes Schichtstoff-Dekorationsmaterialpapier.


**Revendications**

1.  Un procédé de préparation d'un papier ou carton, comprenant les étapes consistant :

    (a) à fournir un polymère à sphère creuse réalisé :

        i. en formant un polymère de phase de coeur,
        ii. en encapsulant ledit polymère de phase de coeur avec au moins un polymère de phase d'enveloppe, ledit polymère de phase d'enveloppe permettant la pénétration d'une base fixe ou permanente, ledit polymère de phase d'enveloppe ayant une température de transition vitreuse supérieure à 25 °C ; et le polymère de phase d'enveloppe la plus externe ayant une Tg supérieure à 25°C;
        iii. en mettant en contact les particules de polymère multi-phases résultantes avec la base fixe ou permanente, dans lequel soit (1) ledit polymère de phase d'enveloppe comprend au moins 1 % de monomère fonctionnel acide, soit (2) ladite mise en contact a lieu en présence de solvant ;

    (b) au cours de la formation dudit papier ou carton dans la partie humide, à incorporer dans ledit papier ou carton une composition comprenant ledit polymère à sphère creuse ; et
    (c) à faire sécher ledit papier ou carton ;

    dans lequel ledit polymère de phase de coeur est formé par polymérisation de 5 % en poids à 100 % en poids, rapporté au poids total de polymère de phase de coeur, dudit monomère mono-éthyléniquement insaturé contenant une fonctionnalité acide, et de 0 % en poids à 95 % en poids, rapporté au poids total de polymère de phase de coeur, d'au moins un monomère mono-éthyléniquement insaturé non ionique ;
    dans lequel ledit polymère de phase d'enveloppe est formé par polymérisation en émulsion en présence dudit polymère de phase de coeur de 90 % en poids à 99,9 % en poids, rapporté au poids total de polymère de phase d'enveloppe, d'au moins un monomère mono-éthyléniquement insaturé non ionique, et de 0,1 % en poids à 10 % en poids, rapporté au poids total de polymère de phase d'enveloppe, d'un monomère mono-éthyléniquement insaturé fonctionnel acide ; et
    dans lequel ledit monomère mono-éthyléniquement insaturé fonctionnel acide est ajouté à la polymérisation dudit polymère de phase d'enveloppe sur les premiers 50 % de l'alimentation en monomère de phase d'enveloppe totale, et la taille de particule dudit polymère de phase de coeur fait de 130 nm à 2,0 $\mu$m ou est inférieure à 130 nm.

2. Le procédé, selon la revendication 1, dans lequel la taille de particule dudit polymère de phase de coeur est inférieure à environ 130 nm.

3. Le procédé de la revendication 1, dans lequel ledit polymère de phase d'enveloppe est réticulé.

4. Le procédé de la revendication 1, dans lequel ledit papier a une épaisseur allant de 12,25 $\mu$m à 50,8 $\mu$m (de 0,5 millième de pouce à 2 millièmes de pouce).

5. Le procédé, selon la revendication 1, dans lequel ladite composition incorporée comprend en outre au moins un pigment.

6. Un papier formé grâce au procédé de l'une quelconque des revendications 1 à 5.

7. Un procédé tel que revendiqué dans la revendication 5, dans lequel le papier est un papier décoratif laminé.

8. Un papier décoratif laminé formé grâce au procédé de la revendication 7.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4594363 A
- US 6139961 A
- US 5710227 A
- US 6046278 A
- EP 1010706 A
- US 5041464 A
- US 5157084 A
- US 5216044 A
- EP 1092421 A
- US 5494971 A

**Non-patent literature cited in the description**

- T.G. Fox. Bull. Am. Physics Soc, 1956, vol. 1, 123